# EUROPEAN PATENT APPLICATION

(11) **EP 4 700 918 A1**
(43) Date of publication of application: **25.02.2026**
(21) Application number: 25195371.7
(22) Date of filing: 12.08.2025
(51) Int. Cl.: H01M 10/658, H01M 50/204, H01M 50/218, H01M 50/233, H01M 50/26, H01M 50/287

(54) **BATTERY MODULE AND BATTERY PACK**

(30) Priority: 23.08.2024 CN 202422065681 U
(71) Applicant: AESC Japan Ltd., Yokohama-Shi, Kanagawa 220-0012 (JP)
(72) Inventor: YANG, Yunting, Pudong New Area Shanghai, 201315 (CN); BAI, Yulong, Pudong New Area Shanghai, 201315 (CN)
(74) Representative: Becker, Eberhard

(57) **Abstract**

A battery module and a battery pack are provided. The battery module includes a casing (1) having an opening, a cell stack (2) having a tab side and mounted in the casing (1), and an adhesive block (3) filled at the opening to block the opening. A tab side of the cell stack (2) corresponds to the opening. The adhesive block (3) covers the tab side of the cell stack (2). An outer wall of the adhesive block (3) forms a portion of an outer wall of the battery module.

## Description

### BACKGROUND

### Technical Field

The disclosure belongs to the field of power battery technology and particularly relates to a battery module and a battery pack.

### Description of Related Art

Generally, the outer wall of an existing battery module is formed by a casing. Through the presence of the casing, a relatively enclosed mounting space is provided for components mounted inside the casing. The overall structure of the casing is bulky, occupies a large space, and has a large overall weight, so the overall space utilization of the battery module is lowered, making it difficult to improve the energy density of the battery module.

### SUMMARY

In view of the abovementioned disadvantages found in the related art, the disclosure aims to provide a battery module and a battery pack to solve the problems of large overall weight and low space utilization of a battery modules in the related art and to improve the space utilization and energy density of the battery module and the battery pack.

To achieve the above and other related purposes, the disclosure provides a battery module including a casing, a cell stack, and an adhesive block.

The casing has an opening.

The cell stack has a tab side and mounted in the casing, and the tab side of the cell stack corresponds to the opening.

The adhesive block is filled at the opening to block the opening and cover the tab side of the cell stack. An outer wall of the adhesive block forms a portion of an outer wall of the battery module.

Optionally, the battery module further includes a sampling component located in the casing, directly positioned and mounted on the casing, and electrically connected to the cell stack.

Optionally, the adhesive block wraps at least a portion of the sampling component and at least a portion of a tab of the cell stack.

Optionally, the casing includes an upper cover, and the sampling component is positioned and mounted on the upper cover.

Optionally, the upper cover has a bending structure. The sampling component includes a flexible printed circuit board positioned and mounted on the upper cover and connected and fixed to the bending structure.

Optionally, the upper cover is partially bent and extends toward the cell stack to form the bending structure, and the bending structure overlaps with at least a portion of the flexible printed circuit board.

Optionally, the sampling component further includes a sampling element electrically connected to the flexible printed circuit board and the tab of the cell stack. The bending structure includes one bending portion. The flexible printed circuit board is fixed to the bending portion. The sampling element includes an elastic clamp connected to the flexible printed circuit board and clamped and fixed onto the tab of the cell stack.

Optionally, the elastic clamp has a first clamping portion and a second clamping portion opposite to each other. The first clamping portion and the second clamping portion are matched to elastically clamp the tab extending between the first clamping portion and the second clamping portion.

Optionally, the second clamping portion is provided with a pressing portion having a pressed state and a released state. The second clamping portion is suitable for being away from the first clamping portion when the pressing portion is in the pressed state, and the second clamping portion is suitable for being close to the first clamping portion when the pressing portion is in the released state.

Optionally, the bending structure includes a plurality of bending portions spaced apart and distributed in an extending direction of the flexible printed circuit board, and the flexible printed circuit board is fixed to each of the bending portions.

Optionally, the bending portions includes a first bending portion, a second bending portion, and a third bending portion spaced apart and distributed in the extending direction of the flexible printed circuit board. The second bending portion is farther away from the flexible printed circuit board than the first bending portion and the third bending portion. A reinforcing plate is sandwiched between the flexible printed circuit board and the second bending portion and is used to compensate for a distance difference between the second bending portion and the flexible printed circuit board. Further, a side of the reinforcing plate facing the flexible printed circuit board is flush with a side of the first bending portion facing the flexible printed circuit board and a side of the third bending portion facing the flexible printed circuit board.

Optionally, the casing is provided with a first groove and/or a first boss. The adhesive block has a second boss corresponding to the first groove and/or a second groove corresponding to the first boss.

Optionally, the casing further includes a bottom plate and two side plates opposite to each other. The bottom plate and the side plates are connected to and matched with the upper cover to form the casing having openings at both ends.

To achieve the above and other related purposes, the disclosure further provides a battery pack including the battery module according to the above.

As described above, beneficial effects provided by the battery module and the battery pack of the disclosure at least include the following. The adhesive block is filled at the opening of the casing. The opening and the tab side of the cell stack are blocked and covered by the adhesive block. Through the adhesive block, thermal protection is achieved, heat spread is prevented, and additional parts are not required to be arranged to block the opening. The number of parts is decreased, and the weight is lowered, so that costs are reduced, the space utilization is improved, and the energy density of the battery module and the battery pack is increased.

### BRIEF DESCRIPTION OF THE DRAWINGS

FIG. 1 is a schematic view of a structure of a battery module of a first embodiment according to the disclosure.
FIG. 2 is an exploded schematic view of the battery module in FIG. 1.
FIG. 3 is a local exploded view of the structure of the battery module in FIG. 1.
FIG. 4 is a local schematic view of connection of a sampling component and a casing of the battery module in FIG. 1.
FIG. 5 is a local schematic view of connection of an elastic clamp and a cell stack in FIG. 4.
FIG. 6 is a schematic view of a structure of the elastic clamp in FIG. 5.
FIG. 7 is a local cross-sectional view of the elastic clamp and the cell stack in FIG. 5.
FIG. 8 is an enlarged schematic view of a portion A in FIG. 7.
FIG. 9 is a local schematic view of connection of a sampling component and a casing of a battery module of a second embodiment of the disclosure.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification.

it should be noted that the structures, scales, sizes, etc. shown in the accompanying drawings in the specification are only to be used together with the content disclosed in the specification for a person having ordinary skill in the art to comprehend and read, are not intended to define the defining conditions of the implementation of the disclosure, and therefore have no technical significance. Any structural modification, proportional relationship change, or size adjustment, without affecting the effects and objectives that can be achieved by the disclosure, should still fall within the scope of the technical content disclosed in the disclosure. Further, terms such as "upper", "lower", "left", "right", "middle", and "one" quoted in this specification are only for the convenience of description and are not used to define the applicable scope of the disclosure. The change or adjustment of its relative relationship should also be regarded as the applicable scope of the disclosure without substantive change of the technical content.

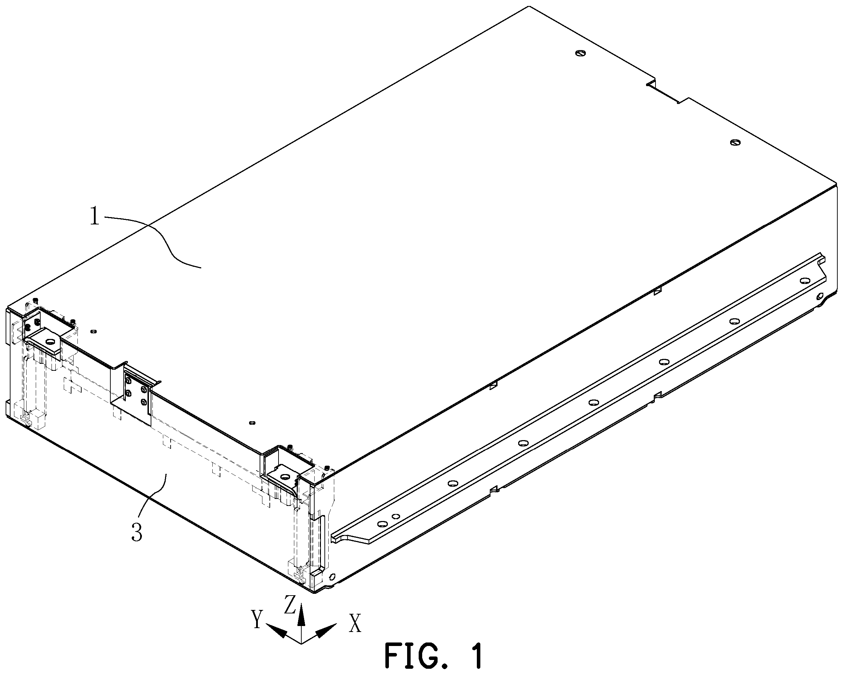

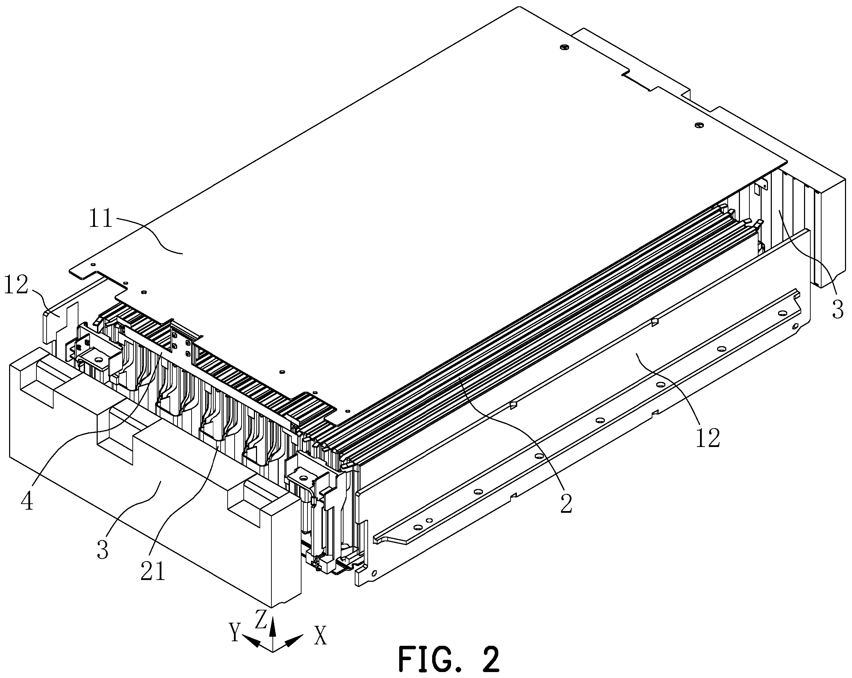

Referring to FIG. 1 and FIG. 2, in some optional embodiments, the disclosure provides a battery pack including a battery module.

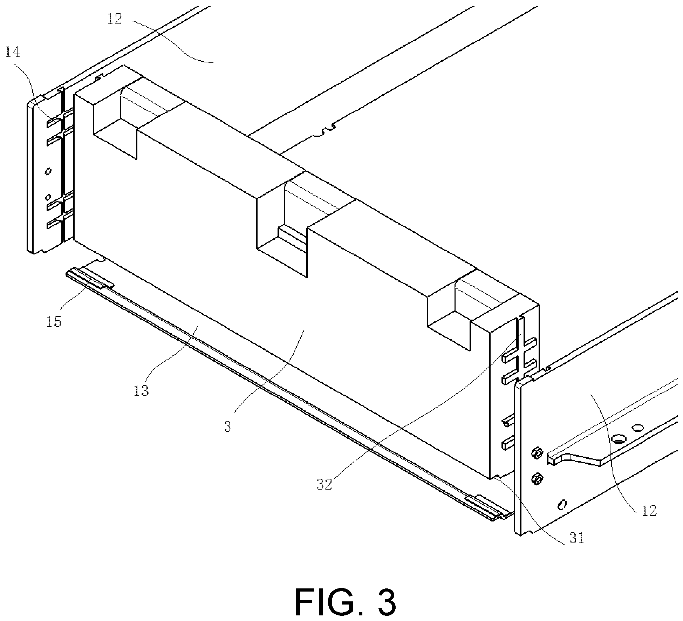

Referring to FIG. 1 to FIG. 3, in some optional embodiments, the battery module provided by the disclosure includes a casing 1, a cell stack 2, and an adhesive block 3. In addition to the above components, the battery module may further include a sampling component 4. The casing 1 has an opening. The cell stack 2 has a tab side and is mounted in the casing 1, and the tab side of the cell stack 2 corresponds to the opening. The adhesive block 3 is filled at the opening to block the opening and cover the tab side of the cell stack 2. Herein, an outer wall of the adhesive block 3 forms a portion of an outer wall of the battery module. That is, the outside of the adhesive block 3 does not have other structures shielding the adhesive block 3, so that the adhesive block 3 may provide the function and effect of an end plate of a conventional battery module.

Optionally, the sampling component 4 is located inside the casing 1, is directly positioned and mounted on the casing 1, and is electrically connected to the cell stack 2. The sampling component 4 electrically connected to the cell stack 2 may collect information such as temperature and voltage of the cell stack 2. Herein, the cell stack 2 includes a plurality of stacked cells, and the cells have tabs 21. The tab side of the cell stack 2 and the tabs 21 of the cells are located on the same side, and the sampling component 4 is electrically connected to the tabs 21 of the cells.

Optionally, the casing 1 is provided with a first groove 14 and/or a first boss 15. The adhesive block 3 has a second boss 32 corresponding to the first groove 14 and/or a second groove 31 corresponding to the first boss 15. In this structural design, a contact area between the adhesive block 3 and the casing 1 is increased, so that friction is increased and the reliability of connection between the adhesive block 3 and the casing 1 is improved, especially after long-term use. Further, the risk of connection failure between the adhesive block 3 and the casing 1 due to aging of the adhesive block 3 may also be lowered.

Optionally, the adhesive block 3 includes a foam adhesive, which is simple, convenient, and quick to fill with good insulation and heat insulation effects. Herein, the second boss 32 and the second groove 31 may be formed during the filling process of the foam adhesive.

Optionally, the casing 1 includes an upper cover 11, a bottom plate 13, and two side plates 12. The two side plates 12 are opposite to each other, the bottom plate 13 and the side plates 12 are connected and matched with the upper cover 11 to form the casing 1 with openings at both ends. Specifically, the bottom plate 13 is located between the two side plates 12, and two ends of the bottom plate 13 are connected to the two side plates 12 to form a U-shaped structure with the opening facing the upper cover 11. In this structural design, the end plate that seals the opening is eliminated, so that the structure is simplified and the weight is decreased. In the disclosure, a distribution direction of the upper cover 11 and the bottom plate 13 is the same as a height direction of the side plates 12, i.e., the Z direction in the drawings. A length direction of the cell stack 2, a length direction of the cells, and the length direction of the side plates 12 are the same, i.e., the X direction in the drawings.

Optionally, the upper cover 11 is provided with an adhesive injection hole, and through the adhesive injection hole, the foam adhesive may be injected into the casing 1 to form the adhesive block 3 to block the opening of the casing 1 and cover the tab side of the cell stack 2. Further, the adhesive block 3 wraps at least a portion of the sampling component 4 and at least a portion of each tab 21 of the cell stack 2. During specific arrangement, a fixture may be used to block the opening first, then the foam adhesive is injected into the casing 1. After the foam adhesive completes foaming and forms a stable adhesive block structure that blocks the opening, the fixture is removed, and the installation of the adhesive block 3 is thereby completed.

In the battery module of the above embodiments, the casing 1 has an opening, and the opening and the tab side of the cell stack 2 are blocked and covered by the adhesive block 3. The adhesive block 3 forms a portion of the outer wall of the battery module. In this way, the need for an additional end plate to block the opening is eliminated, so the structure is simplified and the weight is reduced. Further, the adhesive block 3 provides heat insulation and flame retardant effects, so that protection is provided when thermal runaway occurs in the battery module, and the risk of thermal propagation is thus reduced. In addition, the sampling component 4 is directly positioned and mounted on the casing 1. With the casing 1 providing positioning support for the sampling component 4, the need for an additional plastic bracket to achieve the positioning and mounting of the sampling component 4 is eliminated, and the number of parts and overall weight may be decreased, so that costs are lowered, and space utilization and energy density of the battery module are increased.

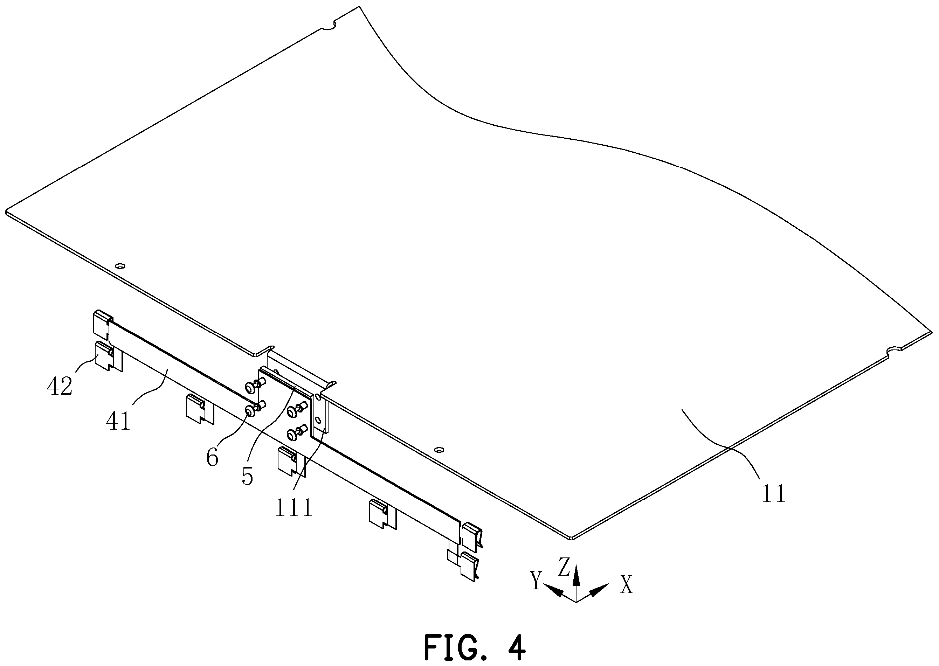

Referring to FIG.1, FIG.2, FIG.4, and FIG.9, in some optional embodiments, the sampling component 4 includes a flexible printed circuit board 41 and a sampling element 42. The flexible printed circuit board 41 is positioned and mounted on the upper cover 11 and is electrically connected to the tabs 21 of the cell stack 2 through the sampling element 42. That is, the sampling element 42 is electrically connected to the flexible printed circuit board 41 and the tabs 21 of the cell stack 2. The flexible printed circuit board 41 is electrically connected to the tabs 21 of the cells through the sampling element 42 to collect information from the cells. It may be understood that the flexible printed circuit board 41 is not limited to being positioned and mounted on the upper cover 11, but may also be positioned and mounted on the side plates 12.

Optionally, the flexible printed circuit board 41 extends in a stacking direction of the cells, and there are multiple sampling elements 42 distributed in an extending direction of the flexible printed circuit board 41. In the disclosure, the extending direction of the flexible printed circuit board 41, the distribution direction of the sampling elements 42, and the stacking direction of the cells are the same, namely the Y direction in the drawings.

Optionally, the upper cover 11 has a bending structure, and the flexible printed circuit board 41 is connected and fixed to the bending structure. Herein, the flexible printed circuit board 41 may be adhesively fixed to the bending structure or riveted by a rivet 6. Further, a portion (e.g., an end portion) of the upper cover 11 is bent and extends toward the cell stack 2 to form the bending structure, and the bending structure overlaps with at least a portion of the flexible printed circuit board 41. The adhesive block 3 wraps at least a portion of each sampling component 4 to further enhance the stability of arrangement of the sampling component 4.

Optionally, each sampling element 42 includes a nickel sheet, and the sampling elements 42 may be welded and fixed to the tabs 21 of the cells.

In the battery module of the above embodiments, the upper cover 11 has the bending structure that is positioned and connected to the flexible printed circuit board 41. The positioning and connection between the bending structure and the flexible printed circuit board 41 is simple and convenient to operate, so that the difficulty of positioning and mounting of the flexible printed circuit board 41 is lowered.

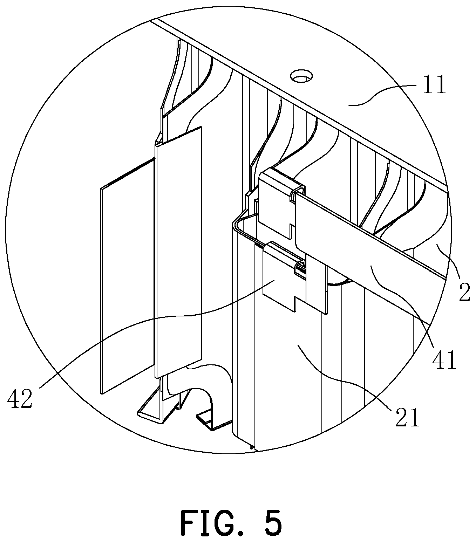

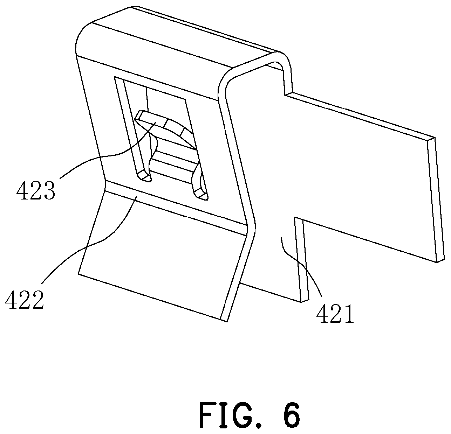

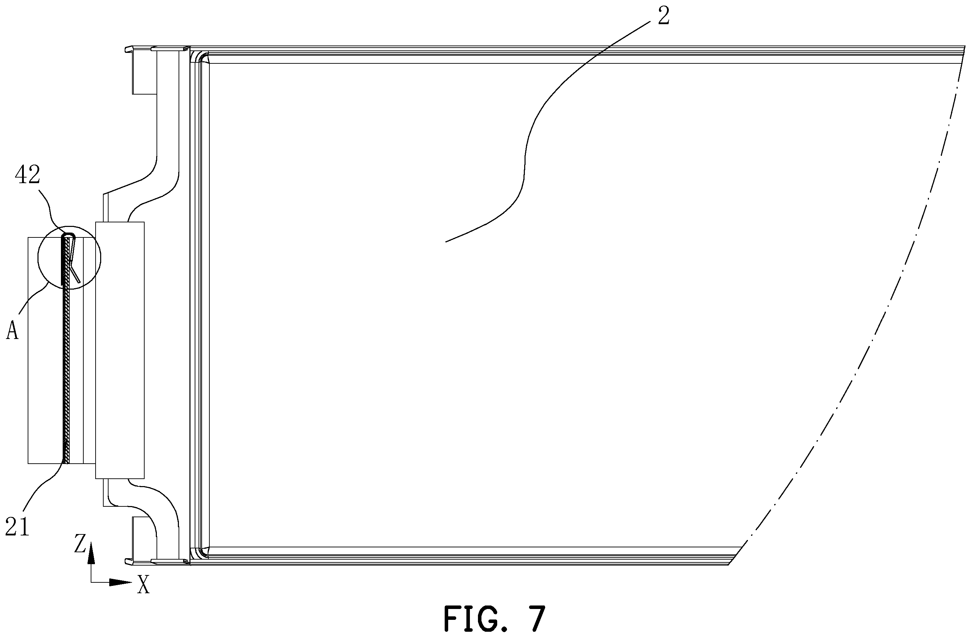

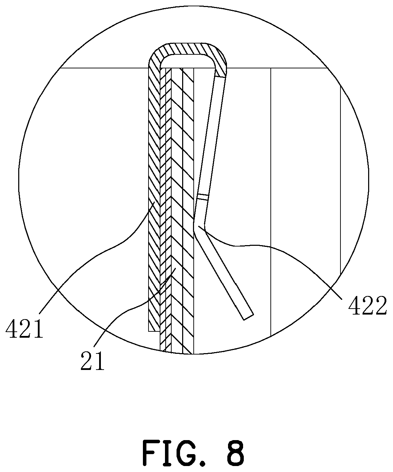

Referring to FIG.1 to FIG.8, in some optional embodiments, the bending structure includes a bending portion 111, the flexible printed circuit board 41 is riveted and fixed to the bending portion 111, and the sampling element 42 includes an elastic clamp. The elastic clamp is connected to the flexible printed circuit board 41 and is clamped and fixed onto the tabs 21 of the cell stack 2. The elastic clamp may be made of a nickel sheet.

Optionally, the elastic clamp has a first clamping portion 421 and a second clamping portion 422 opposite to each other. The first clamping portion 421 and the second clamping portion 422 are matched to elastically clamp the tab 21 extending between the first clamping portion 421 and the second clamping portion 422. By elastically clamping the tab 21 of the cell, the elastic clamp is fixed into a welding position, so as to achieve the mounting and fixation of the sampling element 42 and the flexible printed circuit board 41. To improve the stability of the sampling element 42, the elastic clamp may also be welded and fixed to the tab 21 after the elastic clamp is clamped and positioned. Further, a pressing portion 423 is arranged on the second clamping portion 422. The pressing portion 423 has a pressed state and a released state. The second clamping portion 422 is suitable for being away from the first clamping portion 421 when the pressing portion 423 is in the pressed state, and the second clamping portion 422 is suitable for being close to the first clamping portion 421 when the pressing portion 423 is in the released state. Specifically, the first clamping portion 421 is in the form of a flat plate. One end of the first clamping portion 421 partially extends and bends to form the second clamping portion 422 opposite to the first clamping portion 421. An active end of the second clamping portion 422 is warped in a direction away from the first clamping portion 421 to be matched with the second clamping portion 422 to define a guiding opening. The guiding opening provides a guiding function to facilitate the tab 21 to extend between the first clamping portion 421 and the second clamping portion 422 from the guiding opening.

Optionally, a reinforcing plate 5 is sandwiched between the flexible printed circuit board 41 and the bending portion 111. Through the reinforcing plate 5, the connection strength between the flexible printed circuit board 41 and the bending portion 111 is improved.

In the battery module of the above embodiments, the upper cover 11 is only provided with one single bending portion 111, so that the structure of the upper cover 11 is simplified. The sampling element 42 of the sampling component 4 uses an elastic clamp with elastic clamping performance, which enables the sampling component 4 to be connected and fixed to the tabs 21 of the cell stack 2. In this way, the stability and firmness of the positioning and mounting of the sampling component 4 are improved.

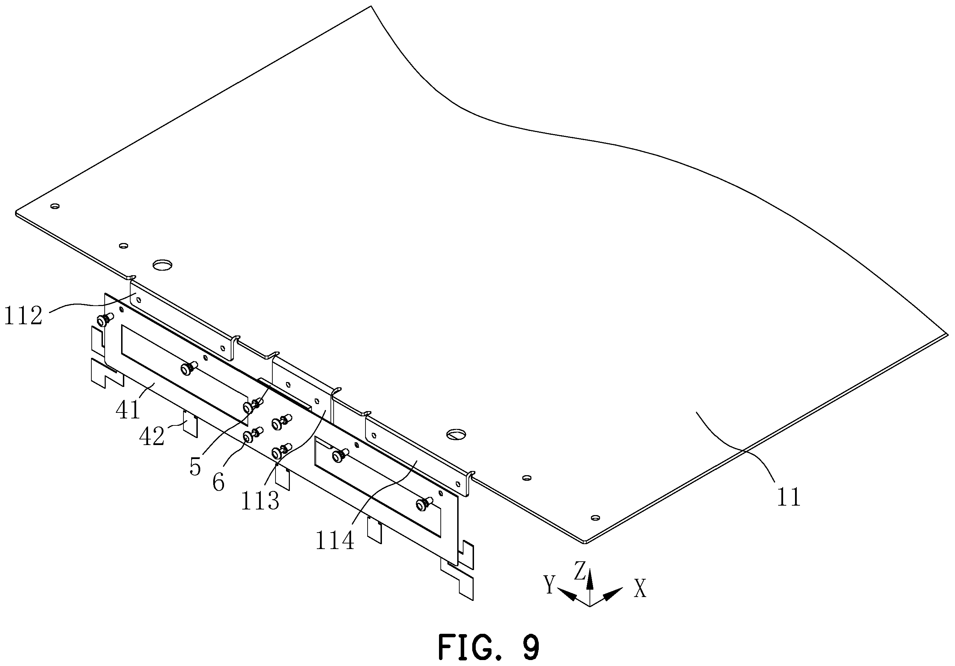

Referring to FIG.9, in some optional embodiments, the bending structure includes a plurality of bending portions distributed spaced apart and distributed in the extending direction of the flexible printed circuit board 41, and the flexible printed circuit board 41 is riveted and fixed to the bending portions through rivets 6.

Optionally, the bending portions include a first bending portion 112, a second bending portion 113, and a third bending portion 114 spaced apart and distributed in the extending direction of the flexible printed circuit board 41. The second bending portion 113 is farther away from the flexible printed circuit board 41 than the first bending portion 112 and the third bending portion 114. The reinforcing plate 5 is sandwiched between the flexible printed circuit board 41 and the second bending portion 113 and is used to compensate for a distance difference between the second bending portion 113 and the flexible printed circuit board 41. Further, a side of the reinforcing plate 5 facing the flexible printed circuit board 41 is flush with a side of the first bending portion 112 facing the flexible printed circuit board 41 and a side of the third bending portion 114 facing the flexible printed circuit board 41. Alternatively, the side of the first bending portion 112 facing the flexible printed circuit board 41 is flush with the side of the third bending portion 114 facing the flexible printed circuit board 41. When the flexible printed circuit board 41 is attached to the first bending portion 112 and the third bending portion 114, a gap is provided between the side of the second bending portion 113 facing the flexible printed circuit board 41 and the flexible printed circuit board 41. A thickness of the reinforcing plate 5 is equal to the gap. Through the arrangement of the reinforcing plate 5, on one hand, the connection strength may be improved, and on the other hand, surfaces of the first bending portion 112, the reinforcing plate 5, and the third bending portion 114 that are attached to the flexible printed circuit board 41 are all located on the same plane. In this way, it is ensured that the flexible printed circuit board 41 is fixed into the same plane, and the positioning of the sampling element 42 is thus achieved.

In the battery module of the above embodiments, the upper cover 11 has multiple bending portions, and the flexible printed circuit board 41 connected to the bending portions can achieve the positioning and mounting of the sampling component 4, making the mounting and positioning of the sampling component 4 simple and convenient.

In the battery module and battery pack provided by the disclosure, the structure of the battery module is simplified, and the positioning and mounting of the sampling component 4 are achieved. Compared to a conventional battery module, in particular, the end plate and plastic bracket are eliminated, so the structure is simplified and the weight is reduced. The sampling component 4 is directly positioned and connected to the casing 1 and no longer needs to be fixed to the plastic bracket through adhesion or thermal riveting, so that reliability of connection of the flexible printed circuit board 41 is improved. In particular, compared to adhesion approaches, it is less likely to fail after long-term use, and thermal riveting to the plastic bracket is not required, so the process is simplified and the costs are reduced.

In the description of the specification, descriptions with reference to the terms such as "this embodiment", "examples", "specific examples", etc. means that the specific features, structures, materials, or characteristics described in combination with the embodiment(s) or example(s) are included in at least one embodiment or example of the disclosure. In the specification, the illustrative representations of the above terms do not necessarily refer to the same embodiments or examples. Moreover, the described specific features, structures, materials, or characteristics may be combined in any suitable manner in one or more embodiments or examples.

## Claims

1. A battery module, comprising:
a casing (1) having an opening;
a cell stack (2) having a tab side and mounted in the casing (1), wherein the tab side of the cell stack (2) corresponds to the opening;
an adhesive block (3) filled at the opening to block the opening and cover the tab side of the cell stack (2), wherein an outer wall of the adhesive block (3) forms a portion of an outer wall of the battery module.

2. The battery module according to claim 1, wherein the battery module further comprises a sampling component (4) located in the casing (1), directly positioned and mounted on the casing (1), and electrically connected to the cell stack (2).

3. The battery module according to claim 2, wherein the adhesive block (3) wraps at least a portion of the sampling component (4) and at least a portion of a tab (21) of the cell stack (2).

4. The battery module according to claim 2, wherein the casing (1) comprises an upper cover (11), and the sampling component (4) is positioned and mounted on the upper cover (11).

5. The battery module according to claim 3, wherein the upper cover (11) has a bending structure, and the sampling component (4) comprises a flexible printed circuit board (41) positioned and mounted on the upper cover (11) and connected and fixed to the bending structure.

6. The battery module according to claim 5, wherein the upper cover (11) is partially bent and extends toward the cell stack (2) to form the bending structure, and the bending structure overlaps with at least a portion of the flexible printed circuit board (41).

7. The battery module according to claim 5, wherein the sampling component (4) further comprises a sampling element (42) electrically connected to the flexible printed circuit board (41) and the tab (21) of the cell stack (2), the bending structure comprises one bending portion (111), the flexible printed circuit board (41) is fixed to the bending portion (111), and the sampling element (42) comprises an elastic clamp connected to the flexible printed circuit board (41) and clamped and fixed onto the tab (21) of the cell stack (2).

8. The battery module according to claim 7, wherein the elastic clamp has a first clamping portion (421) and a second clamping portion (422) opposite to each other, and the first clamping portion (421) and the second clamping portion (422) are matched to elastically clamp the tab (21) extending between the first clamping portion (421) and the second clamping portion (422).

9. The battery module according to claim 8, wherein the second clamping portion (422) is provided with a pressing portion (423) having a pressed state and a released state, the second clamping portion (422) is suitable for being away from the first clamping portion (421) when the pressing portion (423) is in the pressed state, and the second clamping portion (422) is suitable for being close to the first clamping portion (421) when the pressing portion (423) is in the released state.

10. The battery module according to claim 5, wherein the bending structure comprises a plurality of bending portions (111) spaced apart and distributed in an extending direction of the flexible printed circuit board (41), and the flexible printed circuit board (41) is fixed to each of the plurality of bending portions (111).

11. The battery module according to claim 10, wherein the bending portions (111) comprise a first bending portion (112), a second bending portion (113), and a third bending portion (114) spaced apart and distributed in the extending direction of the flexible printed circuit board (41), the second bending portion (113) is farther away from the flexible printed circuit board (41) than the first bending portion (112) and the third bending portion (114), a reinforcing plate (5) is sandwiched between the flexible printed circuit board (41) and the second bending portion (113) and is used to compensate for a distance difference between the second bending portion (113) and the flexible printed circuit board (41), and a side of the reinforcing plate (5) facing the flexible printed circuit board (41) is flush with a side of the first bending portion (112) facing the flexible printed circuit board (41) and a side of the third bending portion (114) facing the flexible printed circuit board (41).

12. The battery module according to claim 1, wherein the casing (1) is provided with a first groove (14) and/or a first boss (15), and the adhesive block (3) has a second boss (32) corresponding to the first groove (14) and/or a second groove (31) corresponding to the first boss (15).

13. The battery module according to claim 4, wherein the casing (1) further comprises a bottom plate (13) and two side plates (12) opposite to each other, and the bottom plate (13) and the side plates (12) are connected to and matched with the upper cover (11) to form the casing (1) having openings at both ends.

14. The battery module according to claim 1, wherein the adhesive block (3) comprises a foam adhesive.

15. A battery pack, comprising the battery module according to any one of claims 1-14.
